# EUROPEAN PATENT SPECIFICATION

(11) **EP 3 066 422 B1**
(45) Date of publication and mention of the grant of the patent: **26.09.2018**
(21) Application number: 14790095.5
(22) Date of filing: 28.10.2014
(51) Int. Cl.: G01D 5/244

(54) **POSITION MEASUREMENT ENCODER CALIBRATION**
KALIBRIERUNG EINES POSITIONSMESSUNGSCODIERERS
ÉTALONNAGE DE CODEUR DE MESURE DE POSITION

(30) Priority: 05.11.2013 EP 13275279
(43) Date of publication of application: 14.09.2016
(73) Proprietor: Renishaw Plc., Wotton-Under-Edge, Gloucestershire GL12 8JR (GB)
(72) Inventor: HOWLEY, Colin Keith, Wotton-under-Edge Gloucestershire GL12 8JR (GB); MCADAM, Simon Eliot, Wotton-under-Edge Gloucestershire GL12 8JR (GB)
(74) Representative: Rolfe, Edward William
(86) International application number: PCT/EP2014/073144
(87) International publication number: WO 2015/067506

(56) References cited:
- EP-A1- 2 372 313
- US-A1- 2002 130 650
- US-A1- 2007 168 861
- US-A1- 2012 025 066
- US-B2- 7 624 513

## Description

This invention relates to a position measurement encoder, comprising a scale and a readhead for reading the scale to determine their relative position and/or movement.

As will be understood, a position measurement encoder typically comprises a scale comprising features and a readhead for reading the features so as to be able to determine relative position and/or movement of the readhead and scale. The scale and readhead are moveable relative to each other. Scale comes in many different forms, including linear, rotary and disc.

Incremental encoders are known wherein the scale comprises a series of incremental features which the readhead can read to determine and measure relative motion. As will be understood, various techniques can be used to read the incremental features, including simple imaging of the incremental features and counting the features as they pass the readhead.

Many incremental encoders rely on the use of a combination of gratings arranged to diffract light so as to produce optical patterns at a detector which changes as the readhead and scale move relative to each other. Examples of incremental encoders include those produced by Renishaw plc available under the brand names TONiC™ and SiGNUM™. In the TONiC™ and SiGNUM™ encoders light from a light source in the readhead interacts with the scale to produce diffraction orders, which in turn interact with a diffraction grating in the readhead to produce at a photodetector array in the readhead an interference fringe pattern which moves with relative movement of the scale and readhead. Such an interference fringe can be detected and used to provide signals indicative of relative movement. Often, quadrature signals, i.e. first and second signals which are out of phase with each other (e.g. 90 degrees out of phase, e.g. Sin and Cos signals) are output by a readhead to indicate direction as well as a measure of relative movement.

Often, one or more reference marks are provided (e.g. embedded within or next to the series of incremental features, either on the same scale substrate or next to it) such that relative position can be determined with respect to known reference position(s) defined by the reference mark(s). A separate reference photodetector can be provided in the readhead to detect the reference mark(s). In an optical encoder (e.g. an encoder in which light in the infra-red to ultraviolet range is used) a reference mark can for example provide an increase or decrease in the amount of light received at the reference photodetector. An example of an incremental encoder is disclosed in US7659992.

Absolute encoders are known wherein the scale comprises a series of features which the readhead can read to determine unique positions along the length of the scale. An example of an absolute encoder is disclosed in WO2010/139964.

It is known to calibrate a readhead on installation. US2012/0025066 describes an example readhead which can be put into a calibration mode. Calibration routines can involve one or more stages and involve one or more processes/routines which the readhead executes. For example, in the case of an incremental encoder, one stage can optimise the incremental signals and another stage(s) can optimise the reference mark settings. It has been found that the readhead can stall part way through a calibration routine which if left unchecked can cause the readhead to operate incorrectly during use, thereby potentially exposing sensitive and expensive equipment on which the encoder is used to damage. Currently used feedback techniques, such as signalling to a user via light emitting diodes (LEDs) on the readhead have been found to be insufficient in certain circumstances.

EP2372313 describes a magnetic rotation detection device that detects absolute angle. EP2372313 describes an absolute angle output mode, in which the rotation signals are outputting starting from when an index signal are outputted up to the latest phase of the magnetic field, and a mode in which only A-phase and B-phase pulse signals are output. A mode execution generator may output a signal (ABS mode signal) which indicates that the absolute angle output mode execution section is executing the output operation of the absolute angle output mode. US200700168861 discloses, in a computing environment, a display which shows the progress of the execution of a user or system initiated task. The display includes the current completion status of the task, and the completion results of the task. The completion results indicate the amount of the task that has been completed and indicates the result of the completion.

This application describes an improved measurement device (e.g. such as a readhead), with improved techniques for communication with an external device so as to reduce the chance of a readhead operating in an uncertain mode, and hence reduce the exposure of machines with which the measurement device is used to expensive and/or irrecoverable damage. For example, this application describes a method of operating a measurement device (for example a position measurement encoder comprising a scale and a readhead for reading the scale, or for example a measurement probe such as a touch-trigger probe or analogue/scanning probe), in which the measurement device can be operated in a plurality of different modes of operation and in which the measurement device can provide feedback signals to a processor so as to indicate the measurement device's mode of operation.

According to a first aspect of the invention there is provided a method of operating a position measurement encoder comprising a scale comprising a series of features and a readhead for reading the scale's features and supplying position signals, the readhead operable in a plurality of different modes of operation, whereby the method comprises: the readhead outputting on at least one signal channel to an external device at least one mode of operation signal indicating the readhead's mode of operation, in which a mode of operation comprises the readhead performing a routine comprising a plurality of stages, and in which the mode of operation signal comprises a signal of at least one predetermined characteristic which varies depending on the routine's stage so as to indicate the progression of the routine.

Outputting at least one mode of operation signal to a device external to the readhead enables appropriate action to be taken in response to the at least one mode of operation signal, even when the readhead itself cannot be seen to determine its status. For instance the external device could comprise at least one user detectable output which operates based on the at least one mode of operation signal, e.g. so that it can relay the at least one mode of operation signal to a user. The user could then make sure that the readhead is in the correct/desired mode of operation. This could help to avoid incorrect/inadequate position signals which could lead to incorrect operation of the position measurement encoder and/or any apparatus on which the position measurement encoder is mounted. Optionally, the, or another, external device could determine how to proceed based on the mode of operation signal. For instance, the external device could comprise a controller device for an apparatus on which the position measurement encoder is mounted. The controller could alter how it controls the apparatus based on the at least one mode of operation signal. For instance, it could halt operation of the apparatus based on the at least one mode of operation signal.

The external device could, for example, comprise an output device which the user can sense and determine the readhead's mode of operation based on the state of the output device. The output device could comprise a visual output device. The visual output device could be a light emission device. Optionally, the visual output device could comprise a display, for instance a graphical display, for example a graphical user interface.

The output device could be directly controlled by the at least one mode of operation signal. For instance, the at least one mode of operation signal could directly control the operation of a light emission device (e.g. a light emitting diode). Optionally, the external device processes the at least one mode of operation signal and controls the output device based on such the outcome of such processing. For instance, the external device could interpret the at least one mode of operation signal and output (e.g. display on a graphical display) a signal (e.g. a message) to a user that is indicative of the at least one mode of operation signal received.

The signal channel could comprise a wireless and/or a wired signal channel. Accordingly, in the case of wired embodiment, the signal channel could be said to comprise a signal line.

As will be understood, the at least one mode of operation signal can be distinct from the readhead's position signals. That is, the at least one mode of operation signal indicates the readhead's mode of operation as opposed to the quality of the readhead's position signals. Accordingly, as will be understood, the at least one mode of operation signal can be determined independent of the position signals. Rather, the at least one mode of operation signal is based on the readhead's mode of operation.

The readhead could comprise two or more different modes of operation. As will be understood, there can be different types of modes of operation. Optionally, the readhead can have a plurality of primary, mutually exclusive modes of operation. For instance, the readhead could comprise a measuring mode of operation and a mutually exclusive programming mode of operation (that is the readhead could be configured such that it can only be in one of these two different modes of operation). Optionally, the readhead could comprise a plurality of different modes of operation that are not mutually exclusive, i.e. that can operate concurrently. Optionally, these could comprise sub-modes of operation. For example, the readhead could comprise a measuring mode of operation and further more it can have optional concurrent (or "sub") modes of operation such as an automatic gain control (AGC) mode of operation in which AGC is active. Optionally, other modes of operation (for instance any programming, set-up, installation, calibration modes of operation) could operate concurrently (e.g. could be "sub"-modes of operation).

A mode of operation (which in the context of the above could for example be a primary, mutually exclusive mode of operation, or a concurrent (or sub) mode of operation) can comprise the readhead performing a routine. The routine can comprise a plurality of (e.g. distinct/identifiable) stages. The mode of operation signal can indicate the mode of operation's routine's stage. That is, the mode of operation signal can indicate what stage the routine is currently at, for example. Accordingly, the mode of operation signal can differ depending on the progression of the routine, for instance differ depending on the mode of operation's routine's stage. The mode of operation signal can indicate whether or not the routine has completed.

The plurality of different modes of operation can comprise a set-up mode of operation. A set-up mode of operation can be a mode of operation used during the set-up of the readhead. For instance, the set-up mode of operation could be used during installation and/or calibration of the readhead. Accordingly, a mode of operation could comprise an installation mode of operation and/or a calibration mode of operation.

The method can comprise instructing the readhead to change its mode of operation. This can comprise sending a signal to the readhead. The signal could be sent by an external device, e.g. the same external device to which the at least one mode of operation signal is sent. The signal could be sent via the same signal channel, e.g. on the same signal line, via which the mode of operation signal is output by the readhead to the external device.

The mode of operation signal can comprise a signal of at least one predetermined characteristic, e.g. predetermined amplitude, type, frequency, pattern. The mode of operation signal can comprise a predetermined voltage level. The mode of operation signal can comprise a signal of at least one predetermined characteristic (e.g. amplitude, type, frequency, pattern) which varies depending on the progression of a routine of the mode of operation. For example, the mode of operation signal can comprise a predetermined voltage level which is dependent on the progression of the routine. Optionally, the mode of operation signal can comprise (e.g. a series of) signal pulses. Optionally, the pulses differ dependent on the progression of the routine. For example, the pulses could differ in their amplitude, number, frequency, pattern, etc.

The set-up mode of operation can comprise a calibration mode of operation. A calibration routine can comprise analysing the readhead's performance and adjusting operation of the readhead based thereon. For example, a calibration routine can comprise analysing the readhead's scale (e.g. incremental, reference mark and/or absolute) signal(s) and adjusting/reconfiguring the operation of the readhead based thereon. Adjusting/reconfiguring can comprise a number of different possibilities including altering the intensity of light emitted by the readhead to illuminate the scale, adjusting parameters, variables, thresholds, or the like used in the processing of signals to read scale features, etc.

The position measurement encoder can comprise an absolute position measurement encoder. For example, the scale can comprise a series of features defining uniquely identifiable positions along the length of the scale. The position measurement encoder can comprise an incremental position measurement encoder. Accordingly, the scale can comprises a series of periodic features, the readhead being configured to read the series of periodic features. The scale can comprise at least one reference mark. A calibration mode of operation can comprise the readhead calibrating at least one of: a) the readhead's incremental signal; and b) the readhead's reference mark signal.

The same signal channel (e.g. the same signal line) could be used to communicate non-mode of operation signals (e.g. non-mode of operation information). For example, the signal channel (e.g. same signal line) could also be used to communicate position signals. Accordingly, the at least one mode of operation signal could be superimposed on any non-mode of operation signal/information, multiplexed therewith or interrupt/take the place of any non-mode of operation signals/information.

As will be understood, the readhead will comprise a sensor for reading the scale. The type and form of the sensor will vary depending on the type of the position measurement encoder. The position measurement encoder can comprise an optical position measurement encoder. Accordingly, the readhead can comprise at least one light-sensitive detector, e.g. a photodetector. As will be understood, light used by the readhead can be anywhere in the electromagnetic spectrum from and including the infra-red range to the ultraviolet range, and hence light in this case does not only mean visible light. The readhead can comprise a light source for illuminating the scale. The position measurement encoder could be configured such that light from the readhead's light source interacts first with the scale to produce a first set of diffraction orders before interacting with a diffraction grating in the readhead to produce further diffraction orders which interfere to create an interference fringe (which changes with relative movement of the scale and readhead) at a sensor in the readhead. A readhead can use the same sensor, or could comprise separate sensors, for reading the scale's incremental and reference mark features.

Optionally, the position measurement encoder is a magnetic, inductive or capacitive position encoder, in which case a suitable sensor will be present in the readhead for reading the magnetic, inductive or capacitive features on the scale. As will be understood hybrid position measurement encoders which utilise a mix of any of optical, magnetic, inductive or capacitive technologies are available. According to a second aspect of the invention there is provided a readhead for an encoder apparatus, the readhead being configured to read a scale comprising a series of features and supply position information signals, the readhead being operable in a plurality of modes of operation, whereby the readhead is configured to output at least one mode of operation signal via at least one signal channel which is indicative of the readhead's mode of operation, in which a mode of operation comprises the readhead performing a routine comprising a plurality of stages, and in which the mode of operation signal comprises a signal of at least one predetermined characteristic which varies depending on the routine's stage so as to indicate the progression of the routine.

Accordingly, this application describes a method of calibrating a position measurement encoder comprising a readhead and a scale, the method comprising: the readhead executing a calibration routine comprising a plurality of stages, the readhead providing at least one signal of at least one predetermined characteristic which varies depending on the routine's stage so as to indicate progression of the calibration routine on a signal line to an external device.

An embodiment of the invention will now be described, by way of example only, with reference to the following drawings in which:
Figure 1 is a schematic isometric illustration of an encoder apparatus according to the present invention;
Figure 2 is a schematic illustration of the readhead shown in Figure 1 connected to an installation/diagnostic unit or a controller via an interface unit;
Figure 3 is a schematic illustration of the readhead of Figures 1 and 2 and a CAL line arrangement;
Figure 4 illustrates signal levels on a CAL line in a prior art encoder apparatus for initiating a calibration routine;
Figure 5 illustrates signal levels on a CAL line in an encoder apparatus according to the present invention for initiating a calibration routine and for providing feedback, according to a first embodiment of the invention;
Figure 6 illustrates signal levels on a CAL line in an encoder apparatus according to the present invention for initiating a calibration routine and for providing feedback, according to a second embodiment of the invention;
Figure 7 illustrates signal levels on a Vx line in an encoder apparatus according to the present invention for providing feedback relating to the status of a mode of operation of the readhead, according to a third embodiment of the invention;
Figure 8 illustrates signal levels on a Vx line in an encoder apparatus according to the present invention for providing feedback relating to the status of a mode of operation of the readhead, according to a fourth embodiment of the invention; and
Figure 9 illustrates a flow chart for installing a readhead.

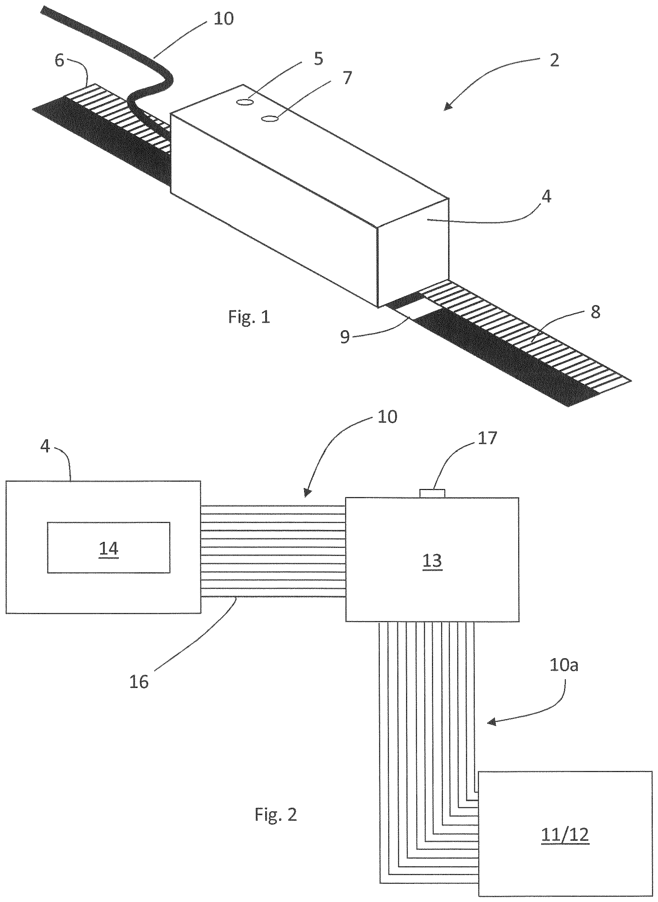

Referring to Figure 1 there is shown an encoder apparatus 2 comprising a readhead 4 and a scale 6. A cable 10 comprising a plurality of wires is provided for supplying power to the readhead 4 and also for facilitating communication with the readhead (as explained in more detail below). In the embodiment described, the scale 6 is an incremental scale and comprises a first track comprising a series of incremental periodic marks 8 and a second track comprising a reference mark 9. As will be understood, a reference mark can be used to identify a reference (optionally a unique) position along the scale. A reference mark could delineate a boundary of permitted machine motion (e.g. it could be what is commonly referred to as a limit mark). In the embodiment shown, the reference mark does not delineate a boundary, rather it identifies a reference position part way along the scale. As will be understood, not all incremental scales comprise reference marks. Furthermore, optionally reference mark(s) can be provided in the same track as series of the incremental period marks 8, e.g. as disclosed in US7659992. As will be understood, the scale's features are schematically shown in order to aid illustration. As will be understood, scale features can be as small as only a few microns wide (e.g. only a few tens of microns wide, or even smaller) as opposed to the size illustrated in the drawing.

In the embodiment described, the encoder apparatus is an optical encoder apparatus 2. The readhead comprises a LED (not shown) which is configured to illuminate the scale. Light from the LED which falls on the track comprising the periodic scale marks 8 is diffracted thereby creating diffraction orders. These orders are reflected back toward the readhead 4 and then interact with a readhead diffraction grating (not shown) to generate diffraction orders which then interact to form a resultant field (in this case an interference fringe) on a detector in the readhead. Position signals, in this case in the form of quadrature signals (i.e. first and second signals which are out of phase with each other (e.g. 90 degrees out of phase, e.g. sine and cosine signals)) are output by the readhead 4 to indicate a measure of relative movement. In this case, the position signals (that is the quadrature signals) indicate direction as well as magnitude of relative movement. Such an arrangement is well known, and for instance is described in US4959542 and US5861953. As will be understood, other (e.g. optical) arrangements are possible and well known in the field of position measurement encoders.

Light falling on the track comprising the reference mark 9 is substantially absorbed or scattered, apart from when the readhead 4 is over the reference mark 9 at which point the light is reflected back toward the readhead 4. The readhead 4 comprises a sensor for detecting light reflected by the reference mark 9. Such an arrangement is well known, and for instance is described in US7659992, US7624513 and US7289042. As will be understood, other optical arrangements are possible and well known in the field of position measurement encoders.

As shown, the readhead 4 has a first 5 and a second 7 light indicators viewable from the outside of the readhead 4. These will be explained in more detail below.

As schematically illustrated in Figure 2, the readhead 4 comprises electronics 14 (and as will be understood, optionally software) used in the operation of the readhead 4. For example, the electronics 14 can control the operation of the readhead's LED for illuminating the scale, can relay, process and/or analyse signals detected by the readhead (for example, relay signals from the incremental onto the cable 10 to the interface 13, condition/process signals and/or analyse signals before such relaying and/or in order to determine how to control the first 5 and/or second 7 light indicators). The electronics 14 can also control whether the readhead operates in particular modes of operation, e.g. a measuring mode (and sub-modes within that, such as whether automatic gain control (AGC) mode is enabled), a programming mode, a set-up mode which could comprise for example an installation mode and/or a calibration mode.

As schematically illustrated in Figure 2, the cable 10 comprises a number of lines (for example twelve lines, illustrated by the solid lines extending between the readhead 4 and the interface unit 13). These lines could, for example comprise:

| **Category** | **Type** |
|---|---|
| 2x Power Supply Lines | Input (Power) |
| 4x Incremental Output Lines | Output (Signal) |
| 2x Reference Mark Output Lines | Output (Signal) |
| 2x Limit Output Lines | Output (Signal) |
| 1x Setup Signal Line (Vx) | Output (Signal) |
| 1x Calibration Line (CAL) | Input/output (Signal) |

As will be understood, the number and type of signal lines can vary from encoder to encoder. Generally however, there will be some type of power and signal lines. In the embodiment described the cable 10 is connected to an interface unit 13, which in turn is connected to a controller 12 (e.g. a controller for the machine on which the readhead 4 and scale 6 are mounted) via a cable 10a, in a known arrangement. Once properly installed, set up and calibrated, incremental, reference mark and limit position information signals are transmitted from the readhead to the controller 12 via the interface 13 and the cables 10, 10a, as the readhead 4 and scale 6 move relative to each other. The controller 12 can use the signals to aid control of the machine on which the readhead 4 and scale 6 are mounted (e.g. the controller 12 can use the signals in a feedback control loop).

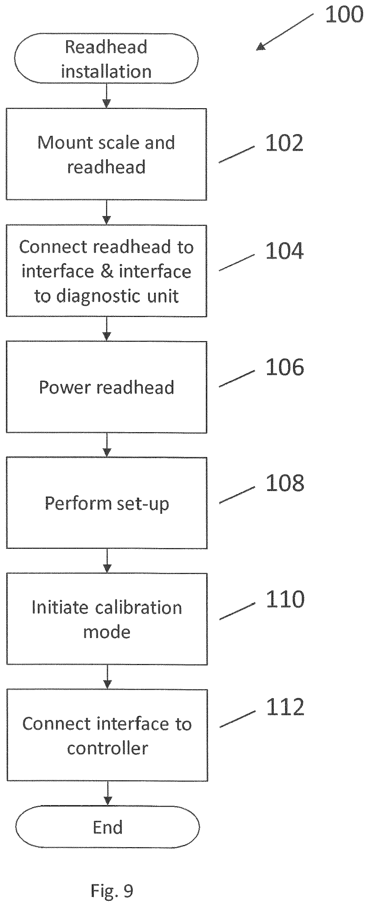

Figure 9 illustrates one example method 100 of installing a readhead. The method begins at step 102 by mounting the readhead 4 and scale 6 to the machine. The readhead 4 is then connected to the interface unit 13 and the interface unit is connected to an installation/diagnostic unit 11 at step 104. (Optionally, during installation/set up, the interface unit 13 can be connected to an installation/diagnostic unit 11 instead of the machine controller 12, and so they are schematically illustrated by the same box in Figure 2. In certain embodiments they could be provided by a common processor device and hence share the same cable connection. That, is during set up, the interface 13 could be connected to the controller 12. Alternatively, if provided as separate processor devices, after installation the cable 10a could be disconnected from the installation/diagnostic unit 11 and then connected to the machine controller 12).

The readhead 4 is then powered up at step 106. At this stage, the readhead 4 is operational and will output incremental position signals to the interface unit 13 which will relay the signals on the second cable 10a to the installation/diagnostic unit 11 or controller 12 (depending on what it is connected to). However, at this stage an installer might want to tweak the physical set up of the readhead to optimise its performance and ensure reliable performance during use. Accordingly, as is known, a set-up step 108 can involve the installer checking that the readhead 4 is optimally positioned with respect to the scale and comprises the installer causing the readhead 4 and scale 6 to move relative to each other, between the boundaries of relative motion. During such motion, the readhead's electronics 14 analyses the incremental signal strength (for instance as described in US5241173) and controls the colour emitted by the first light indicator 5. If the signal strength is good (e.g. is consistently above a predetermined threshold), then the colour emitted is green, if it is bad then the colour emitted is red (e.g. is consistently below a predetermined threshold), and if it is somewhere in-between (e.g. fluctuates above and below a predetermined threshold) then the colour emitted is orange. Accordingly, the installer observes the colour of the first light indicator 5 as the readhead 4 and scale 6 are moved relative to each other, and if the first light indicator 5 emits red or orange light, then the installer tweaks the relative physical set up of the readhead 4 and scale 6 until a good/green signal is achieved along the entire length between the boundaries of relative motion. As is already known, the readhead 4 can also output a signal (e.g. down the Setup Signal/Vx line) to the interface 13 and installation/diagnosis unit 11 which is representative of the incremental signal quality. For instance, a signal, which varies depending on incremental signal quality can be transmitted down the Setup Signal/Vx line. Alternatively, the installation/diagnosis unit 11 can monitor the quality of the incremental signals coming down the Incremental Outputs/ V1+, V1-, V2+, V2- lines. As is known, such signal quality information can be transmitted down the Setup Signal/Vx line, to a controller 12 during normal operation/use of the readhead 4. As will be understood, such a set-up step 108 can be performed whilst the readhead is in its normal reading/measuring mode, or optionally the readhead could be in an installation mode during such set up (which functions differently to the normal reading/measuring mode).

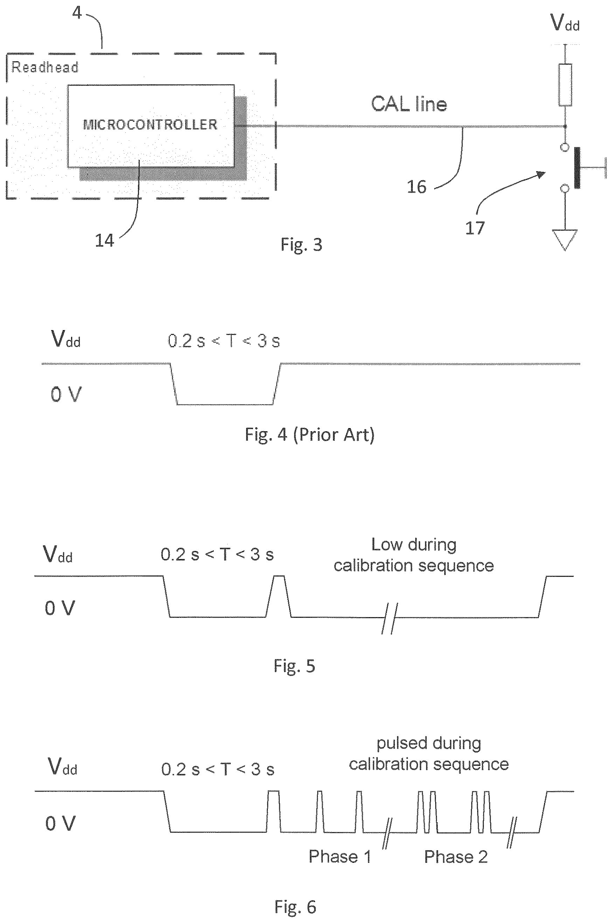

Once the physical arrangement of the readhead 4 and scale 6 has been set up satisfactorily, the installer can then instruct the readhead 4 to enter a calibration mode of operation. This can be done by the installer pressing a switch 17 on the interface 13 for a predetermined amount of time (e.g. between 0.5 and 3 seconds), which causes the Calibration/CAL line on cable 10 between the readhead 4 and the interface 13 to be shorted to ground and hence to drop to a logic level low (e.g. 0V) (as illustrated by Figures 4, 5 and 6. The readhead 4 can listen for such a drop and when detected cause the readhead 4 to enter the calibration mode. In the calibration mode, the readhead 4 performs a calibration routine. As is previously known, this can comprise requiring the readhead 4 to be moved along the scale 6 such that incremental signals can be analysed and (e.g automatically) optimised electronically (e.g. if the readhead 4 determines that the signal strength is too weak then it could increase the brightness of the LED used to illuminate the scale; e.g. adjusting signal offsets). Furthermore, for example, the reference mark signal (if present) could be analysed and used to adjust any thresholds used to detect the reference mark. In any case, regardless of what tasks are performed as part of the calibration routine, as is previously known, the second light indicator 7 can be illuminated in various ways to indicate the progression and completion of the calibration routine, e.g. by modulating the second light indicator 7. However, as is illustrated by Figure 4, no signal representative of the status of the calibration mode is output down a signal line.

Referring to Figure 5 there is illustrated a first embodiment of the invention in which once the readhead 4 enters the calibration mode of operation, the readhead 4 is configured to pull the CAL line down low (e.g. to 0V) and keep it there until it has finished its calibration routine. The installation/diagnosis unit 11 is configured to listen to the CAL line to check whether the CAL line is low or high (e.g. Vdd (for example 5V)). If the CAL line is low the installation/diagnosis unit 11 knows that the readhead 4 has not finished the calibration routine. The installation/diagnosis unit 11 can signal this to the installer (e.g. by displaying an appropriate message on a screen). If the CAL line is high the installation/diagnosis unit 11 knows that the readhead 4 has finished the calibration routine. The installation/diagnosis unit 11 can signal this to the installer (e.g. by displaying an appropriate message on a screen). When the calibration routine is complete, and the readhead is no longer in the calibration mode, the CAL line is returned to high automatically and the readhead 4 begins listening on the CAL line again.

Referring to Figure 6 there is illustrated a second embodiment of the invention in which once the readhead 4 enters the calibration mode of operation, the readhead 4 is configured to pulse the CAL line between low and high, the number of pulses being transmitted being dependent on what stage the calibration routine is at. In this embodiment, the calibration routine has two stages (e.g. a first stage could comprise calibrating the incremental signals and a second stage could comprise calibrating the reference mark signal). Whilst the readhead is performing the first stage of the calibration routine, a single pulse is transmitted down the CAL line at regular intervals. Once the readhead has completed the first stage and is performing a second stage of the calibration routine, a double pulse is transmitted down the CAL line at regular intervals. When the calibration routine has completed all stages, and the readhead is no longer in the calibration mode, the CAL line is returned to high and the readhead 4 begins listening on the CAL line again. Accordingly, the installation/diagnosis unit 11 can listen to the CAL line to determine what stage the calibration routine is at and signal this to the installer based on the number of pulses it detects. If the calibration routine stalls or fails, the installer can identify this and in the case of the second embodiment described above, the installer can identify what stage the calibration routine stalled at and take appropriate action.

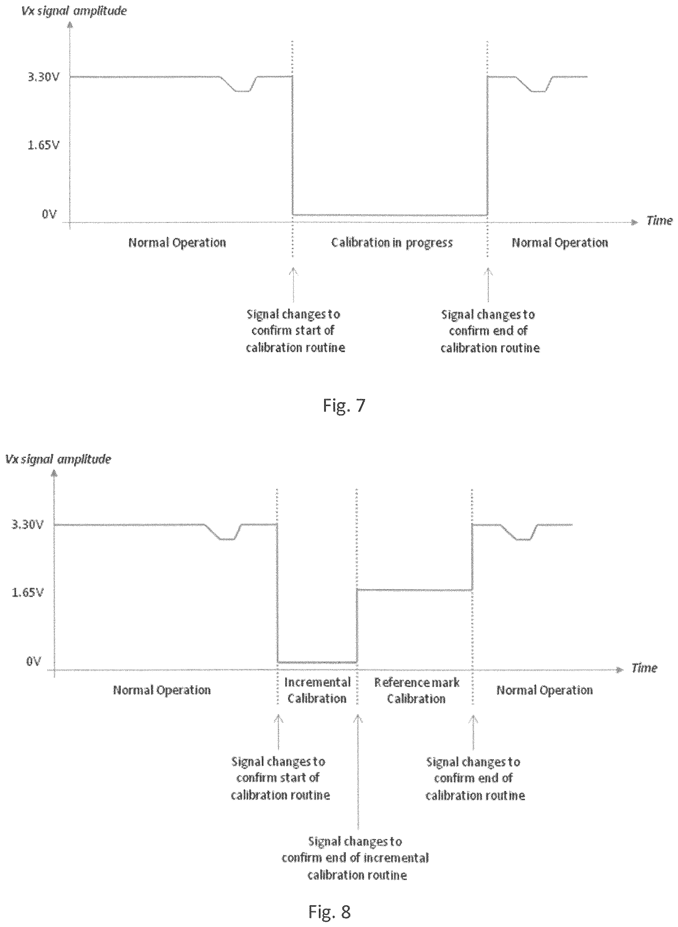

Figures 7 and 8 illustrate a different signal line, in particular the Setup Signal/Vx line, being used to signal the status of the readhead's calibration mode. As illustrated in Figure 7, before the CAL initiation signal is received by the readhead 4 on the CAL line (as explained above, by pressing switch 17 for between 0.5 and 3 seconds), the Vx line is used to transmit incremental signal quality information to the installation/diagnosis unit 11. However, once the readhead 4 is told to enter the calibration mode of operating, the readhead 4 brings the Vx line down to 0V and holds it there until the calibration routine is complete. In Figure 8, the readhead 4 can manipulate the voltage level on the Vx line to indicate the stage which the calibration routine is at, thereby signalling the progression of the calibration routine. As with the embodiments of Figures 5 and 6, the installation/diagnosis unit 11 can be configured to listen to the Vx line and analyses the signal to determine the status of the readhead's calibration mode of operation, and signal the status to the installer. If the calibration routine stalls or fails, the installer can identify this and in the case of the fourth embodiment described above, the installer can identify what stage the calibration routine stalled at and take appropriate action.

As will be understood, there are other ways of transmitting mode of operation status information, for example by making use of different frequencies or mark-space rations of a pulse train.

Once the calibration routine has successfully completed, the installer can then connect the interface unit 13 to the controller 12.

In the embodiment described above, the readhead 4 is configured to output on a signal line to the installation/diagnosis unit a status signal indicative of the status of the readhead's calibration mode of operation. As will be understood, the invention is also useful for indicating the status of different types of mode of operation of the readhead. For instance, as is previously known, the readhead can comprise a further light source for indicating whether or not the readhead's automatic gain control (AGC) mode is engaged or not. In accordance with the invention, feedback of the status of the AGC mode (e.g. whether it is engaged or not) can be relayed via an existing signal line, e.g. by pulsing the CAL line with a specific pulse/frequency/mark-space ratio.

In the embodiment described above, the encoder apparatus 2 is an incremental encoder apparatus. However, as will be understood the invention is also equally applicable to and useful with other types of encoder apparatus such as absolute encoder apparatus (e.g. of the type described in WO2010/139964) which could also comprise various different modes of operation such as a measuring mode, a programming mode and/or a set-up mode such as an installation and/or a calibration mode.

In the embodiment described the encoder apparatus is an optical encoder apparatus. However, as will be understood, the invention is equally applicable to and useful with other types of encoders including magnetic (e.g. as described in WO2013132207), inductive and capacitive position measurement encoders. Furthermore, in the above described embodiments, both the incremental features and the reference mark are optical features and are detected optically. However, as will be understood this need not necessarily be the case and for example the reference mark could be a magnetic reference mark even when the incremental features are optical incremental features.

In the above described embodiments, the status signal(s) indicative of the status of the readhead's calibration mode of operation is output on a signal line which is also used by the to communicate non-mode of operation information with an external processor device. For instance, as well as reporting the status of the mode of operation, the CAL line is also used to initiate the calibration mode, and the Vx line is used to report incremental signal strength. However, as will be understood, this need not necessarily be the case and, for example, the status signal(s) indicative of the status of the readhead's calibration mode of operation could be output on its own dedicated line.

In the above described embodiments the status signal(s) indicative of the status of the readhead's calibration mode of operation are supplied to a processor device (e.g. the installation/diagnostic unit 11) which processes/analyses the status signal and provides an output to an installer/user. However, as will be understood this need not necessarily be the case. For instance, a the line on which the status signal is output could be connected directly to a light source (e.g. an LED) external to the readhead, wherein the status signal is used to control the operation of the light source (e.g. to modulate the light source, to change its colour, to turn it on and off, etc) in a way which someone can analyse so as to determine the status of the readhead's mode of operation.

As will be understood, configurations and arrangements other than that described above are possible. For example, the interface unit 13 could be provided as part of the readhead 4, in which case the mode of operation signal can be passed directly to the installation/diagnostic unit 11 and/or controller 12. Optionally, the readhead 4 and/or interface unit 13 can be connected to an installation/diagnostic unit 11 and to a separate controller 12 at the same time, e.g. via separate signal lines.

## Claims

1. A method of operating a position measurement encoder (2) comprising a scale (6) comprising a series of features (8) and a readhead (4) for reading the scale's features and supplying position signals, the readhead operable in a plurality of different modes of operation, whereby the method comprises:
the readhead outputting on at least one signal channel to an external device at least one mode of operation signal indicating the readhead's mode of operation, in which a mode of operation comprises the readhead performing a routine comprising a plurality of stages, and in which the mode of operation signal comprises a signal of at least one predetermined characteristic which varies depending on the routine's stage so as to indicate the progression of the routine.

2. A method as claimed in claim 1, in which the mode of operation signal indicates whether or not the routine has completed.

3. A method as claimed in any preceding claim, in which the plurality of different modes of operation comprises a set-up mode of operation, for example a calibration mode of operation.

4. A method as claimed in any preceding claim, in which the method comprises instructing the readhead to change its mode of operation, which comprises sending a signal to the readhead on the same signal line on which the mode of operation signal is output by the readhead to the external device.

5. A method as claimed in any preceding claim, in which the mode of operation signal comprises a predetermined voltage level.

6. A method as claimed in claim 5, in which the mode of operation signal comprises a predetermined voltage level which is dependent on the progression of the routine.

7. A method as claimed in claim 1, in which the mode of operation signal comprises signal pulses, the pulses differing dependent on the progression of the routine.

8. A method as claimed in any preceding claim, in which the position measurement encoder is an incremental position measurement encoder, the scale comprises a series of periodic features, the readhead configured to read the series of periodic features, and optionally the scale comprises at least one reference mark (9).

9. A method as claimed in claim 3 and 8, in which the calibration mode of operation comprises calibrating at least one of: a) the readhead's incremental signal; and b) the readhead's reference mark signal.

10. A method as claimed in any preceding claim, in which the at least one signal channel comprises a signal line, the signal line also being used to communicate non-mode of operation information.

11. A method as claimed in any preceding claim, in which the position measurement encoder is an optical position measurement encoder.

12. A readhead (4) for an encoder apparatus (2), the readhead configured to read a scale (6) comprising a series of features (8) and supply position information signals, the readhead operable in a plurality of modes of operation, whereby the readhead is configured to output at least one mode of operation signal via at least one signal channel which is indicative of the readhead's mode of operation, in which a mode of operation comprises the readhead performing a routine comprising a plurality of stages, and in which the mode of operation signal comprises a signal of at least one predetermined characteristic which varies depending on the routine's stage so as to indicate the progression of the routine.

13. A method of calibrating a position measurement encoder (2) comprising a readhead (4) and a scale (7), the method comprising the readhead executing a calibration routine comprising a plurality of stages, the readhead providing at least one signal of at least one predetermined characteristic which varies depending on the routine's stage so as to indicate progression of the calibration routine on a signal line to an external device.

## Patentansprüche

1. Verfahren zum Betrieb eines Positionsmesscodierers (2), der eine Skala (6), die eine Reihe von Merkmalen (8) umfasst, sowie einen Lesekopf (4) zum Lesen der Skalenmerkmale und zum Liefern von Positionssignalen umfasst, wobei der Lesekopf in einer Mehrzahl verschiedener Betriebsmoden betreibbar ist, wobei das Verfahren umfasst, dass:
der Lesekopf an zumindest einem Signalkanal an eine externe Vorrichtung zumindest ein Betriebsmodussignal ausgibt, das den Betriebsmodus des Lesekopfes angibt, wobei ein Betriebsmodus umfasst, dass der Lesekopf eine Routine ausführt, die eine Mehrzahl von Stufen umfasst, und wobei das Betriebsmodussignal ein Signal zumindest einer vorbestimmten Charakteristik umfasst, die abhängig von der Stufe der Routine variiert, um so den Fortschritt der Routine anzugeben.

2. Verfahren nach Anspruch 1, wobei das Betriebsmodussignal angibt, ob die Routine beendet worden ist oder nicht.

3. Verfahren nach einem der vorhergehenden Ansprüche, wobei die Mehrzahl verschiedener Betriebsmoden einen Einrichtbetriebsmodus, beispielsweise einen Kalibrierungsbetriebsmodus umfasst.

4. Verfahren nach einem der vorhergehenden Ansprüche, wobei das Verfahren umfasst, dass der Lesekopf angewiesen wird, seinen Betriebsmodus zu ändern, was umfasst, dass ein Signal an dem Lesekopf auf derselben Signalleitung, an der das Betriebsmodussignal von dem Lesekopf an die externe Vorrichtung ausgegeben wird, sendet.

5. Verfahren nach einem der vorhergehenden Ansprüche, wobei das Betriebsmodussignal einen vorbestimmten Spannungspegel umfasst.

6. Verfahren nach Anspruch 5, wobei das Betriebsmodussignal einen vorbestimmten Spannungspegel umfasst, der von dem Fortschritt der Routine abhängig ist.

7. Verfahren nach Anspruch 1, wobei das Betriebsmodussignal Signalimpulse umfasst, wobei sich die Pulse abhängig von dem Fortschritt der Routine unterscheiden.

8. Verfahren nach einem der vorhergehenden Ansprüche, wobei der Positionsmesscodierer ein inkrementeller Positionsmesscodierer ist, die Skala eine Reihe periodischer Merkmale umfasst, der Lesekopf derart konfiguriert ist, die Reihe periodischer Merkmale zu lesen, und optional die Skala zumindest eine Referenzmarkierung (9) umfasst.

9. Verfahren nach einem der Ansprüche 3 und 8, wobei der Kalibrierungsbetriebsmodus ein Kalibrieren von zumindest einem umfasst, aus: a) dem inkrementellen Signal des Lesekopfes; und b) das Referenzmarkierungssignal des Lesekopfes.

10. Verfahren nach einem der vorhergehenden Ansprüche, wobei der zumindest eine Signalkanal eine Signalleitung umfasst, wobei die Signalleitung auch dazu verwendet ist, eine Nichtbetriebsmodusinformation zu kommunizieren.

11. Verfahren nach einem der vorhergehenden Ansprüche, wobei der Positionsmesscodierer ein optischer Positionsmesscodierer ist.

12. Lesekopf (4) für eine Codiervorrichtung (2), wobei der Lesekopf derart konfiguriert ist, eine Skala (6) zu lesen, die eine Reihe von Merkmalen (8) umfasst, und Positionsinformationssignale zu liefern, wobei der Lesekopf in einer Mehrzahl von Betriebsmoden betreibbar ist, wobei der Lesekopf derart konfiguriert ist, zumindest ein Betriebsmodussignal über zumindest einen Signalkanal auszugeben, das den Betriebsmodus des Lesekopfes angibt, wobei ein Betriebsmodus umfasst, dass der Lesekopf eine Routine ausführt, die eine Mehrzahl von Stufen umfasst, und wobei das Betriebsmodussignal ein Signal von zumindest einer vorbestimmten Charakteristik umfasst, die abhängig von der Stufe der Routine variiert, um den Fortschritt der Routine anzugeben.

13. Verfahren zum Kalibrieren eines Positionsmesscodierers (2), mit einem Lesekopf (4) und einer Skala (7), wobei das Verfahren umfasst, dass der Lesekopf eine Kalibrierungsroutine ausführt, die eine Mehrzahl von Stufen umfasst, wobei der Lesekopf zumindest ein Signal von zumindest einer vorbestimmten Charakteristik bereitstellt, die abhängig von der Stufe der Routine variiert, um so den Fortschritt der Kalibrierungsroutine an einer Signalleitung zu einer externen Vorrichtung anzugeben.

## Revendications

1. Un procédé de fonctionnement d'un codeur de mesure de position (2) utilisant une règle (6) intégrant un éventail de caractéristiques (8) ainsi qu'une tête de lecture (4) prévue pour lire les caractéristiques de la règle et produire des signaux de position, la tête de lecture pouvant être utilisée selon plusieurs modes de fonctionnement différents, selon lesquels le procédé comprend :
la production par la tête de lecture, sur au moins un canal de signaux vers un dispositif externe, d'au moins un signal de mode de fonctionnement indiquant le mode de fonctionnement de la tête de lecture, où un mode de fonctionnement implique que la tête de lecture réalise une routine composée de différentes étapes et où le signal de mode de fonctionnement correspond à un signal d'au moins une caractéristique prédéterminée qui varie selon l'étape de la routine, de manière à indiquer la progression de la routine.

2. Un procédé tel que revendiqué dans la revendication 1, où le signal de mode de fonctionnement indique si oui ou non la routine a été réalisée.

3. Un procédé tel que revendiqué dans les revendications précédentes, où les différents modes de fonctionnement incluent un mode de paramétrage, notamment un mode de fonctionnement dédié à l'étalonnage.

4. Un procédé tel que revendiqué dans les revendications précédentes, où le procédé consiste à indiquer à la tête de lecture de changer de mode de fonctionnement, ce qui implique l'envoi d'un signal à la tête de lecture sur la même ligne de signaux sur laquelle le signal de mode de fonctionnement est produit par la tête de lecture vers le dispositif externe.

5. Un procédé tel que revendiqué dans les revendications précédentes, où le signal de mode de fonctionnement comprend un niveau de tension prédéterminé.

6. Un procédé tel que revendiqué dans la revendication 5, où le signal de mode de fonctionnement comprend un niveau de tension prédéterminé qui dépend de la progression de la routine.

7. Un procédé tel que revendiqué dans la revendication 1, où le signal de mode de fonctionnement comprend des impulsions, celles-ci variant selon la progression de la routine.

8. Un procédé tel que revendiqué dans les revendications précédentes, où le codeur de mesure de position est un codeur de mesure de position incrémental, la règle comprend un éventail de caractéristiques périodiques, la tête de lecture est configurée pour lire les diverses caractéristiques périodiques, et en option, la règle intègre au moins une marque de référence (9).

9. Un procédé tel que revendiqué dans les revendications 3 et 8, où le mode de fonctionnement dédié à l'étalonnage comprend l'étalonnage, au minimum : a) du signal incrémental de la tête de lecture et b) du signal de marque de référence de la tête de lecture.

10. Un procédé tel que revendiqué dans les revendications précédentes, où au moins un canal de signaux comprend une ligne de signaux, la ligne de signaux étant également employée afin de communiquer des informations non liées au mode de fonctionnement.

11. Un procédé tel que revendiqué dans les revendications précédentes, où le codeur de mesure de position est un codeur de mesure de position optique.

12. Une tête de lecture (4) pour un dispositif codeur (2), la tête de lecture étant configurée pour lire une règle (6) intégrant un éventail de caractéristiques (8) et pour produire des signaux d'information de position, la tête de lecture pouvant être utilisée selon plusieurs modes de fonctionnement différents, selon lesquels la tête de lecture est configurée pour produire au moins un signal de mode de fonctionnement via au moins un canal de signaux indicateur du mode de fonctionnement de la tête de lecture, où un mode de fonctionnement implique que la tête de lecture réalise une routine comprenant diverses étapes, et où le signal de mode de fonctionnement comprend un signal correspondant à au moins une caractéristique prédéterminée qui varie selon l'étape de la routine, de manière à indiquer la progression de la routine.

13. Un procédé d'étalonnage d'un codeur de mesure de position (2) comprenant une tête de lecture (4) et une règle (7), ce procédé impliquant la réalisation par la tête de lecture d'une routine d'étalonnage comprenant plusieurs étapes, la tête de lecture produisant au moins un signal correspondant à au moins une caractéristique prédéterminée qui varie selon l'étape de la routine, de manière à indiquer la progression de la routine d'étalonnage sur une ligne de signaux vers un dispositif externe.
